# EUROPEAN PATENT APPLICATION

(11) **EP 3 166 023 A1**
(43) Date of publication of application: **10.05.2017**
(21) Application number: 15815110.0
(22) Date of filing: 29.05.2015
(51) Int. Cl.: G06F 17/30, B60R 16/02, G01C 21/36, G06F 3/01, G06F 3/048, G06F 3/0481, G06F 3/16, G10L 15/22

(54) **IN-VEHICLE INTERACTIVE SYSTEM AND IN-VEHICLE INFORMATION APPLIANCE**

(30) Priority: 04.07.2014 JP 2014138848
(71) Applicant: Clarion Co., Ltd., Saitama-shi, Saitama 330-0081 (JP)
(72) Inventor: SUGITA, Muneki, Saitama-shi Saitama 330-0081 (JP); YOSHIHARA, Keiichiro, Saitama-shi Saitama 330-0081 (JP)
(74) Representative: Glawe, Delfs, Moll
(86) International application number: PCT/JP2015/065642
(87) International publication number: WO 2016/002406

(57) **Abstract**

To improve convenience for a user. An in-vehicle information appliance 3 includes a voice input unit 10 that receives a speech voice A1 spoken by a user U, and the in-vehicle information appliance 3 outputs a response based on a result of applying an interactive voice recognition process to the speech voice A1. The in-vehicle information appliance 3 includes: a display unit 12; and a display control unit 34 that displays, on the display unit 12, an association image 45 depicting an icon associated with a word or language used in a speech for obtaining the response.

## Description

### Technical Field

The present invention relates to an in-vehicle interactive system and an in-vehicle information appliance.

### Background Art

An example of the background art of the present technical field includes Japanese Patent Laid-Open No. 2014-106927 (Patent Literature 1). This publication states that "included are: operation reception means 33 for receiving predetermined user operation; voice recognition means 23 for converting voice data to text data; categorization means 222 for extracting one or more search keys from the text data recognized by the voice recognition means to categorize the search keys into a preset category; search key creation means 226 for reading out past search keys of the same category recorded in search history data to determine the search keys of the category if there is no search key to be categorized into the category; search history recording means 227 for recording, in a time-series manner, the search keys categorized by the categorization means as the search history data in association with the category; and reference history changing means 228 for changing time-series positions of the search keys read out by the search key creation means from the search history data."

### Citation List

### Patent Literature

Patent Literature 1: Japanese Patent Laid-Open No. 2014-106927

### Summary of Invention

### Technical Problem

Although a user can interact with an in-vehicle apparatus in a vehicle to search desired information, the user may be unable to decide what to speak if a degree of freedom of speech is high.

Therefore, an object of the present invention is to provide an in-vehicle interactive system and an in-vehicle information appliance that can improve convenience for the user.

### Solution to Problem

To attain the object, provided is an in-vehicle interactive system including: an in-vehicle information appliance that receives a speech voice spoken by a user; an interactive voice recognition processing unit that applies an interactive voice recognition process to the speech voice; and a response unit that sends a response based on a result of the interactive voice recognition process to the in-vehicle information appliance, the in-vehicle interactive system further including: a display unit provided on the in-vehicle information appliance; and a display control unit that displays, on the display unit, an image of an icon associated with a word or language used in a speech for obtaining the response.

### Advantageous Effect of Invention

According to the present invention, convenience for the user can be improved.

### Brief Description of Drawings

[Figure 1] Figure 1 is a diagram schematically showing a configuration of an in-vehicle interactive system according to an embodiment of the present invention.
[Figure 2] Figure 2 is a functional block diagram showing a configuration of an in-vehicle information appliance.
[Figure 3] Figure 3 is a diagram schematically showing a display mode of virtual images.
[Figure 4] Figure 4 is a functional block diagram showing a configuration of a service providing server.
[Figure 5] Figure 5 is a tree diagram for describing diversity of content provided by a content server.
[Figure 6] Figure 6 is a sequence diagram regarding display operation of association images.
[Figure 7] Figure 7 is a diagram showing an example of a standby screen.
[Figure 8] Figure 8 is a diagram showing an example of display of an interactive response screen in an acquisition request of content.
[Figure 9] Figure 9 is a diagram showing an example of display of the interactive response screen in a POI information search request.
[Figure 10] Figure 10 is an explanatory diagram of the association image.

### Description of Embodiments

Hereinafter, an embodiment of the present invention will be described with reference to the drawings.

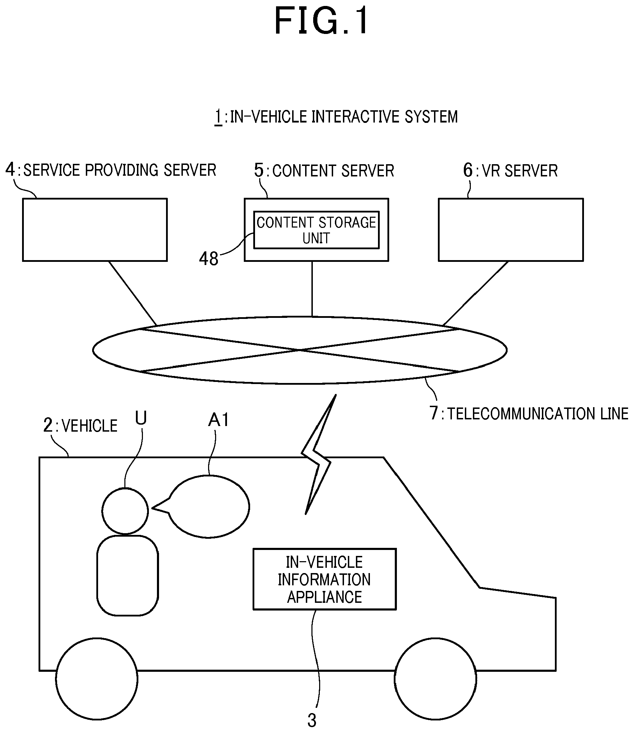

Figure 1 is a diagram schematically showing a configuration of an in-vehicle interactive system 1 according to the present embodiment.

The in-vehicle interactive system 1 is a system in which a user U (mainly a driver) riding on a vehicle 2 gives an instruction to an in-vehicle information appliance 3 mounted on the vehicle 2 through voice input to perform operation. An interactive voice recognition process is used for the voice input.

Unlike in a voice recognition process, a recognition process is not applied to "commands" in the interactive voice recognition process, but a recognition process is applied to "natural spoken language".

The "commands" are words or language preset for instructions of various operations and are words or language, such as "start the voice input", "display ...", and "play the music". In the recognition process using the "commands", words and language other than the "commands" are not recognized, and the user U needs to have a prior knowledge of the "commands" to give appropriate instructions.

On the other hand, the "spoken language" in the "natural spoken language" is language used in everyday conversation. The "natural" "spoken language" is not "spoken language" used by the user U being conscious of the voice input operation for the voice recognition apparatus, but is language usually used by the user U in daily life in a conversation with an opposing "listener".

More specifically, in the in-vehicle interactive system 1, even when a voice is input by speaking "natural spoken language", content equivalent to a meaning usually understood by the "listener" is recognized and understood in the interactive voice recognition process. Therefore, the user U does not have to know in advance the "commands" for giving instructions to the in-vehicle information appliance 3, and the user U can give an instruction by the same free speech as in a conversation in daily life.

The in-vehicle interactive system 1 can acquire content and search POI information through operation by voice input of a speech voice A1 of the user U. As shown in Figure 1, the in-vehicle interactive system 1 includes the in-vehicle information appliance 3, a service providing server 4, a content server 5, and a VR server 6, which are connected to a telecommunication line 7 to mutually perform data communication.

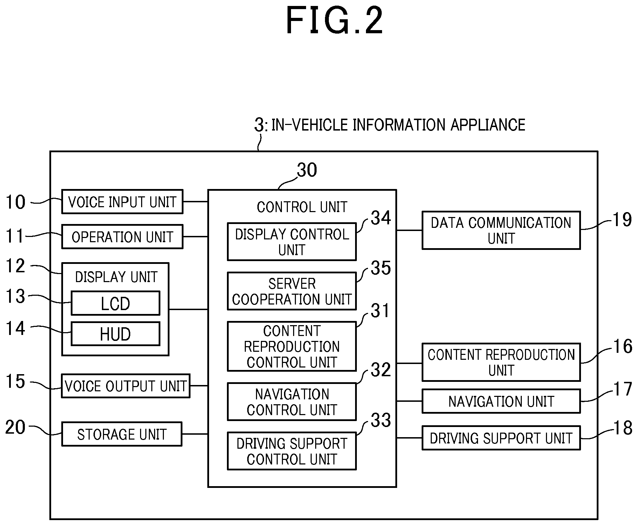

Figure 2 is a functional block diagram showing a configuration of the in-vehicle information appliance 3.

The in-vehicle information appliance 3 is an in-vehicle appliance mounted on the vehicle 2. The in-vehicle information appliance 3 can realize a navigation function and a driving support function in addition to the content providing function and the POI search function and can operate the functions through voice input.

More specifically, as shown in Figure 2, the in-vehicle information appliance 3 includes a voice input unit 10, an operation unit 11, a display unit 12, a voice output unit 15, a content reproduction unit 16, a navigation unit 17, a driving support unit 18, a data communication unit 19, a storage unit 20, and a control unit 30.

The control unit 30 comprehensively controls each unit of the in-vehicle information appliance 3 and is formed by a microcomputer including a CPU, a RAM, a ROM, and the like. A computer program for realizing the control function of the control unit 30 is stored in the ROM. A functional configuration of the control unit 30 will be described later.

The voice input unit 10 acquires the speech voice A1 spoken by the user U and outputs the speech voice A1 to the control unit 30.

The voice input unit 10 includes, for example: a microphone apparatus that collects the speech voice A1 to output an analog voice signal; and a digital processor that digitalizes the analog voice signal by a predetermined coding format to output a digital voice signal. The digital voice signal is output to the control unit 30.

The operation unit 11 includes a plurality of operation elements, allowing manual operation of the in-vehicle information appliance 3.

The display unit 12 displays various information and includes an LCD 13 and an HUD 14.

The LCD 13 is a liquid crystal display and is installed on a dashboard (not shown) provided on the vehicle 2. The LCD 13 displays a main menu screen and a screen corresponding to each function of the content providing function, the navigation function, and the driving support function.

For example, a content display screen or an operation screen for reproduction operation of music content or video content is displayed as the screen corresponding to the content providing function. A map screen for displaying a route guidance map or an information display screen for displaying POI (Point of Interest) information is displayed as the screen corresponding to the navigation function.

Note that in place of the LCD 13, another flat panel display, such as an organic EL display, may be used. A touch panel may be provided on the LCD 13 to form the operation unit 11.

The HUD 14 is display means for displaying information for supporting the driving of the driver based on the situation of a traveling road or traffic and is a so-called head-up display (HUD: Head-Up Display) that displays a virtual image screen V with virtual images in front of the driver.

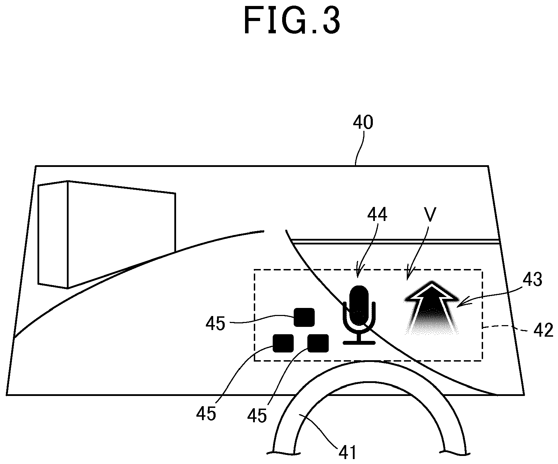

Figure 3 is a diagram schematically showing a display mode of the virtual image screen V.

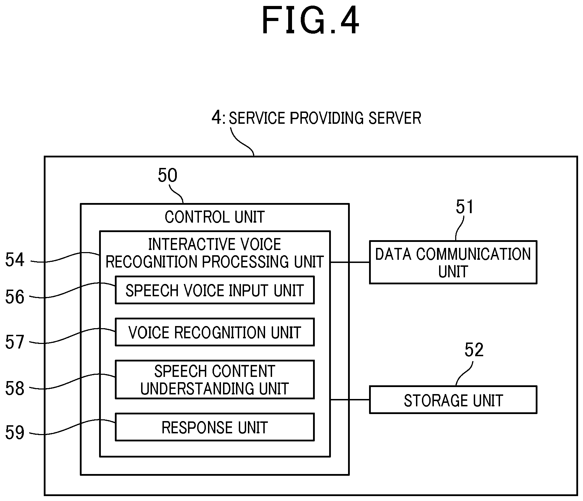

As shown in Figure 4, the HUD 14 projects images on a front windshield 40 of the vehicle 2 for the driver to visually check the virtual image screen V and includes a projection apparatus or a projection optical system not shown that projects the virtual image screen V.

The virtual image screen V is displayed in a predetermined region 42 on a front position of a driving handle 41 as viewed from the driver in order to facilitate the visual check by the driver in the driving operation.

Note that unlike the display position of the HUD 14, the LCD 13 is installed at a position that is unlikely to enter or does not enter the field of view of the driver viewing the front of the front windshield 40 in the driving operation.

Returning to Figure 2, the voice output unit 15 outputs various voices and includes a speaker apparatus installed in the vehicle interior of the vehicle 2.

Examples of the voices output by the voice output unit 15 include a content reproduction sound, an operation sound and an operation guidance voice of the in-vehicle information appliance 3, and an interactive voice in the interactive voice recognition process.

Under the control by the control unit 30, the content reproduction unit 16 realizes a reproduction output function of multimedia content, such as music content, video content, image content, and character content. The content reproduction unit 16 has a multimedia reproduction function included in a normal in-vehicle audio apparatus. The content reproduction unit 16 appropriately outputs voices through the voice output unit 15 and appropriately displays videos, images, and characters on the LCD 13 of the display unit 12. Therefore, the voice output unit 15 and the display unit 12 also function as output units that output the content to allow the user to view the content.

Under the control by the control unit 30, the navigation unit 17 realizes a navigation function. The navigation function includes a route search function of searching a route from the current location or a location designated by the user to the destination and a route guidance function of guiding the route from the current location to the destination.

The navigation unit 17 has various functions included in a normal in-vehicle navigation apparatus including a positioning apparatus, such as a GPS, a storage unit that stores map data, and the like. The navigation unit 17 outputs voices through the voice output unit 15 and appropriately displays various information, such as maps, images, and characters, on the LCD 13 of the display unit 12. The map data includes, as information of road, various information necessary for the driving support by the driving support unit 18 (such as legal speed limit, gradient, regulation information, and alerting information).

Under the control by the control unit 30, the driving support unit 18 realizes a driving support function for supporting the driving of the driver that drives the vehicle 2. As shown in Figure 3, the driving support unit 18 displays a driving support image 43 on the HUD 14 of the display unit 12 to support the driving of the driver.

An arbitrary image indicating information beneficial for the driving operation of the driver is used for the driving support image 43. For example, a route guidance image indicating the direction of the route to the destination, an image indicating information of the traveling road (for example, legal speed limit, gradient, regulation information, and alerting information), or an image for warning an obstacle of the surroundings or in front in the traveling direction is used for the driving support image 43.

Based on the map data and the GPS included in the navigation unit 17 and various vehicle information sensors included in the vehicle 2 (for example, vehicle speed pulse sensor, surrounding object detection apparatus, and a brake operation detection sensor), the driving support unit 18 specifies the information beneficial for the driving operation of the driver and displays the driving support image 43 according to the information on the HUD 14.

The data communication unit 19 has a function of communicating with the telecommunication line 7 through wireless communication. Various mobile communications can be used for the wireless communication, such as communication using a cell phone network and a wireless LAN. The data communication unit 19 may be configured to use another communication apparatus, such as a smartphone and a wireless LAN router terminal, as a repeater to communicate with the telecommunication line 7.

The storage unit 20 stores computer programs executed by the control unit 30 and various data.

The control unit 30 includes a content reproduction control unit 31, a navigation control unit 32, a driving support control unit 33, a display control unit 34, and a server cooperation unit 35.

The content reproduction control unit 31, the navigation control unit 32, and the driving support control unit 33 control the operation of the content reproduction unit 16, the navigation unit 17, and the driving support unit 18, respectively.

The display control unit 34 controls the display of various information on the LCD 13 included in the display unit 12 and the display of the virtual image screen V on the HUD 14.

When voice input based on the speech voice A1 can be received, the display control unit 34 displays a microphone image 44 on the HUD 14 to indicate a standby state of the voice input as shown in Figure 3. The display of the microphone image 44 on the HUD 14 allows the user U to figure out that the voice input based on the speech voice A1 can be received without looking away during the driving operation.

Note that the display control unit 34 displays association images 45 during the display of the microphone image 44, and this will be described later.

The server cooperation unit 35 communicates with the service providing server 4 through the data communication unit 19 and recognizes and understands the speech voice A1 through the interactive voice recognition in cooperation with the service providing server 4. The server cooperation unit 35 provides content to the user U and searches the POI information.

Specifically, in the in-vehicle interactive system 1, the service providing server 4 comprehensively executes the process of recognizing and understanding the speech voice A1 of the user U and the process of acquiring the content requested by the user U and searching the POI information.

More specifically, the server cooperation unit 35 converts the speech voice A1 spoken by the user U to voice data and transmits the voice data to the service providing server 4. The server cooperation unit 35 receives a response based on the result of the interactive voice recognition process of the speech voice A1 from the service providing server 4 and outputs the response to the display unit 12 and the voice output unit 15.

Examples of the response received by the vehicle information appliance 3 from the service providing server 4 include the content requested by the user U, the result of the POI information search, and an interactive response sentence for requesting the user U to respond.

Figure 4 is a functional block diagram showing a configuration of the service providing server 4.

The service providing server 4 is a server computer that recognizes and understands the speech voice A1 of the user U through the interactive voice recognition process and that transmits the content requested by the user U or the POI information to the in-vehicle information appliance 3. As shown in Figure 4, the service providing server 4 includes a control unit 50, a data communication unit 51, and a storage unit 52.

The data communication unit 51 performs data communication with the in-vehicle information appliance 3, the content server 5, and the VR server 6 through the telecommunication line 7.

The storage unit 52 stores computer programs executed by the control unit 50 and various data.

The control unit 50 comprehensively controls each unit and executes the interactive voice recognition process. The control unit 50 includes a CPU, a RAM, a ROM, and the like and operates based on the computer programs stored in the storage unit 52.

An interactive voice recognition processing unit 54 has a function of realizing the interactive voice recognition process and includes a speech voice input unit 56, a voice recognition unit 57, a speech content understanding unit 58, and a response unit 59.

The speech voice A1 of the user U received from the in-vehicle information appliance 3 through the data communication unit 51 is input to the speech voice input unit 56, and the speech voice input unit 56 outputs the speech voice A1 to the voice recognition unit 57. To improve the accuracy of the voice recognition of the speech voice A1 by the voice recognition unit 57, the speech voice input unit 56 removes noise (noise) included in the voice data of the speech voice A1 and then outputs the voice data to the voice recognition unit 57. Note that an arbitrary method in the field of voice signal processing can be used to remove the noise.

The voice recognition unit 57 recognizes the speech voice A1 and outputs text data to the speech content understanding unit 58 after converting the speech voice A1 to a character string (text).

To highly accurately execute the process of recognizing the speech voice A1 in the in-vehicle interactive system 1, the VR server 6 configured to execute the voice recognition process is provided as shown in Figure 1, and the voice recognition unit 57 uses the VR server 6 to convert the speech voice A1 to the text data.

The VR server 6 receives the voice data of the speech voice A1 from the service providing server 4 through the telecommunication line 7 and applies the voice recognition process to the voice data to convert the voice data to the character string. The VR server 6 transmits the text data of the character string to the service providing server 4. The text data is output to the speech content understanding unit 58 through the voice recognition unit 57.

The speech content understanding unit 58 understands the content spoken by the user U based on the text data and outputs results of understanding to the response unit 59.

More specifically, instead of extracting the "command" from the text data to understand the instruction, the speech content understanding unit 58 extracts keywords that are important for the service providing server 4 to execute a task from the word string of the test data and outputs the keywords as results of understanding to the response unit 59.

The task is a matter requested by the user U and is an acquisition request of content or a search request of POI information in the in-vehicle interactive system 1.

That is, the speech content understanding unit 58 extracts, as keywords, words that are important in acquiring the content (for example, type, details, and name of the content) and words that are important in searching the POI information (words serving as search keys).

For example, if the text data of the speech voice A1 is a character string "Well, I want to know the result of the soccer World Cup.", the speech content understanding unit 58 understands that the request (task) of the user U is an acquisition request of content and extracts keywords "soccer, World Cup, and result" as the results of understanding.

If the text data of the speech voice A1 is, for example, a character string "Italian restaurant around here please.", the speech content understanding unit 58 understands that the request of the user U is a search request of the POI information and extracts keywords "Italian, restaurant, and around here" as the results of understanding.

Based on the keywords extracted by the speech content understanding unit 58, the response unit 59 executes the task (request of the user U) understood by the speech content understanding unit 58 and transmits, as a response, a result of the execution to the in-vehicle information appliance 3.

Specifically, if the task is an acquisition request of content, the response unit 59 specifies the content requested by the user U based on the keywords and transmits the content to the in-vehicle information appliance 3. For example, if the keywords are "soccer, World Cut, and result", information of match results of the soccer World Cup is specified as the content requested by the user U to acquire.

If the task is a POI information search request for example, the response unit 59 searches for the POI information based on the keywords and transmits the search result to the in-vehicle information appliance 3. For example, if the keywords are Italian, restaurant, around here", the POI information of Italian restaurants around the current location is searched.

When the response unit 59 acquires the data of the content or the POI information, the response unit 59 acquires the data from the content server 5 (Figure 1) and transmits the data to the in-vehicle information appliance 3.

If the keywords of the results of understanding are insufficient, and the content or the POI information search requested by the user U cannot be specified, the response unit 59 generates an interactive response sentence for promoting input of the speech voice A1 necessary for the specification and transmits the text data of the interactive response sentence to the in-vehicle information appliance 3. The in-vehicle information appliance 3 outputs a synthetic voice based on the text data of the interactive response sentence, and the voice input operation by the user U is carried out in an interactive format.

In Figure 1, the content server 5 is a server computer managed by a so-called content provider and includes a content storage unit 48 that stores data of a variety of content (hereinafter, called "content data") to allow providing the data to the service providing server 4.

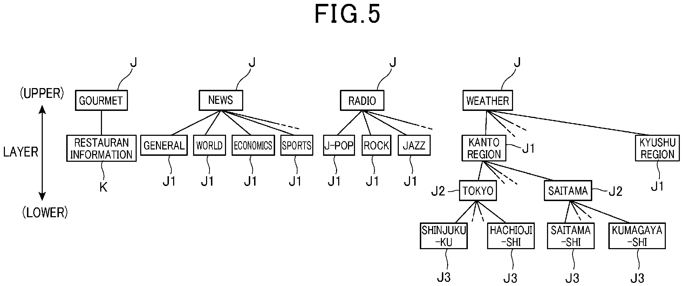

Figure 5 is a tree diagram for describing diversity of the content provided by the content server 5.

As shown in Figure 5, the content server 5 holds and can provide content data of each genre J of "news", "radio", "weather", and "gourmet".

The genres J of "news", "radio", and "weather" are subdivided into lower layer genres J1 positioned in a lower layer of the genres J, and the content data is held in each of the lower layer genres J1.

For example, the lower layer genres J1, such as "economics", "IT", and "sports" are arranged under the genre J of "news", and the content data regarding the genre J of news is prepared in each lower layer genre J1.

The genre J of "radio" indicates a so-called Internet radio. The lower layer genres J1, such as "rock" and "JAZZ", are arranged under the genre J of "radio", and music content data is prepared in each lower layer genre J1.

The genre J of "weather" is a genre for providing weather information, and the lower layer genres J1 categorized by regions, such as "Kanto region" and "Kyushu region", are arranged under the genre J of "weather". Under the lower layer genre J1, lower layer genres J2 categorized by prefectures and lower layer genres J3 further categorizing the prefectures into municipalities are arranged to form layer structures. Weather content data is prepared for each of the lower layer genres J3 in the lowest layer.

The "gourmet" is a genre J as a search target of the POI information, and for example, POI information K, such as restaurant information, is prepared.

Although the content server 5 holds the content data and the POI information of a large number of genres J shown in Figure 5 in the content storage unit 48, the content data is not sorted and managed by the genres J. The genres J, the lower layer genres J1, J2, ..., and tag information including other additional information are linked and managed. The additional information is information unique to each content data, information indicating features based on details of the content, or the like.

When the content server 5 receives a request of content data or POI information from the service providing server 4, the content server 5 performs the search as follows instead of tracing the genre J corresponding to the request toward the lower layers to narrow down and search the content data or the POI information.

More specifically, when the content server 5 receives a request of content data, the content server 5 searches for content data including tag information with a high degree of matching with the request among all of the content data and transmits the content data to the service providing server 4.

When the content server 5 receives a request of POI information, the content server 5 also searches for POI information including tag information with a high degree of matching with the request among all of the POI information and transmits the POI information to the service providing server 4.

According to the search, the content data matching with the request can be extracted even if the genre J and the lower layer genres J1, J2, ... that the content data belongs to are not designated at the request of the content data.

More specifically, when the user U requests the content data through the voice input of the speech voice A1, desired content data is specified without speaking words for designating the genre J and the lower layer genres J1, J2, ....

In this way, even if the user U does not know the genre J or the lower layer genres J1, J2, ... shown in Figure 5 when the user U requests the content and the POI information in the in-vehicle interactive system 1, the service providing server 4 acquires desired content and POI information if the user U speaks words or language associated with the desired content and POI information, and the desired content and POI information is provided to the user U.

In addition, in the in-vehicle interactive system 1, the user U can give an instruction based on voice to the in-vehicle information appliance 3 through an everyday free speech, without speaking predetermined words such as "commands" as described above.

More specifically, the user U can talk anything and can talk in any expression when giving an instruction to the in-vehicle information appliance 3. This realizes the in-vehicle interactive system 1 with a significantly high degree of freedom of speech used for the voice input.

On the other hand, for the user U who is not figuring out the types of content or the POI information that can be provided by the in-vehicle interactive system 1, it is rather difficult for the user U to recognize what to speak if the degree of freedom of speech used for the voice input is high.

Therefore, the user U can figure out the types and the like of the content that can be provided if, for example, the user U manually operates the operation unit 11 to display a main menu or the like on the LCD 13. However, it is not preferable for the driver to gaze at the screen of the LCD 13 during the driving operation.

On the other hand, the HUD 14 is positioned in the field of view of the driver in the driving operation. Therefore, if an example sentence or the like of the speech preferably used for the voice input is displayed on the HUD 14 by characters, the driver unconsciously reads the characters, and this may reduce the concentration of the driver.

If the user U needs to figure out the content that can be provided, the operation is not a voice input operation that does not require a prior knowledge. Moreover, displaying an example sentence or the like of the speech used for the voice input to make the user U read it is not different at all from the voice input based on "commands".

Therefore, the association images 45 are displayed on the virtual image screen V of the HUD 14 in the in-vehicle information appliance 3 as shown in Figure 3 so that the user U can sense the speech for giving an instruction by intuition, even if the user U is not figuring out the content that can be provided and even during the driving operation. The association images 45 are images depicting icons associated with the words or language used to give an instruction through the voice input to the in-vehicle information appliance 3, and the display of the association images 45 on the HUD 14 is controlled by the display control unit 34 of the in-vehicle information appliance 3. The icons used for the association images 45 are images indicating the words or language or images including symbolic graphics, patterns, pictures, or the like. The icons do not include character strings directly indicating the words or language.

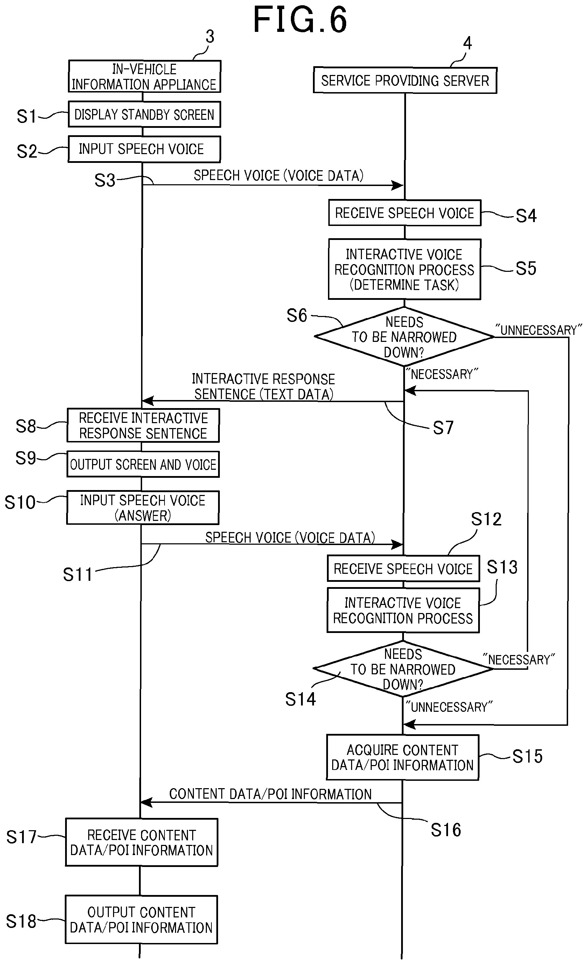

Figure 6 is a sequence diagram regarding the display operation of the association images 45.

As shown in Figure 6, the in-vehicle information appliance 3 displays a standby screen V1 as the virtual image screen V during standby in which the in-vehicle information appliance 3 waits for the voice input (step S1).

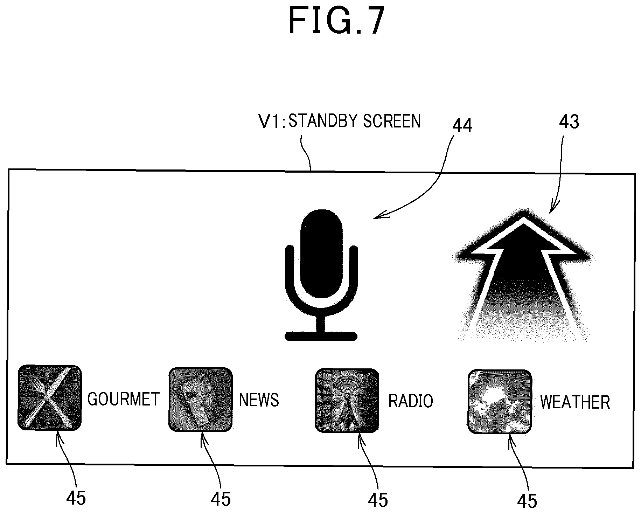

Figure 7 is a diagram showing an example of the standby screen V1.

The standby screen V1 shown in Figure 7 is an example of display during traveling of the vehicle 2. The standby screen V1 includes the driving support image 43 for supporting the driving operation and displays the microphone image 44 indicating the standby state of the voice input. The association images 45 are displayed adjacent to the microphone image 44.

In the in-vehicle interactive system 1, the user U can acquire the content data and the POI information of the genres J of "news", "radio", "weather", and "gourmet" by voice input operation as shown in Figure 5.

Therefore, on the standby screen V1 of the voice input, the in-vehicle information appliance 3 displays, as the association images 45, images depicting icons associated with words or language used when the user U gives an instruction through the voice input in order to acquire the content of the genres J and to search the POI information.

Although the names of the genres J are written next to the association images 45 to help the understanding in the example of Figure 7, the genre names may not be displayed on the HUD 14. When characters are written next to the association images 45, it is preferable that the characters are a character string forming one word so that the user U can instantaneously understand at a glance.

In the example of Figure 7, the icon associated with a word related to the genre J of "news" is "newspaper", and the icon of "newspaper" implicates or suggests the user U for the words and language related to "newspaper", such as "news", "politics", "economics", "sports", and "match results of soccer".

In this case, as the names of the genres J are not explicitly displayed on the standby screen V1, the user U viewing the icons of the association images 45 is encouraged to purely imagine and speak the words or language according to personal concerns or trends of interest.

The words and language associated in this way purely indicate the personal concerns or interests of the user U without being constrained by the names of the genres J. Therefore, the words or language are likely to include words sufficiently suitable as keywords understood by the speech content understanding unit 58 in the interactive voice recognition process, that is, words or language that can directly specify the content data of the lower layer genres J1, J2, ... in the tree diagram of Figure 5.

Therefore, the words and language are used for the speech voice A1, and the desired content data is easily specified by one voice input of the speech voice A1.

Returning to Figure 6, when the speech voice A1 of the user U is input during the display of the standby screen V1 (step S2), the in-vehicle information appliance 3 transmits the voice data of the speech voice A1 to the service providing server 4 (step S3).

When the service providing server 4 receives the voice data of the speech voice A1 (step S4), the service providing server 4 applies the interactive voice recognition process to the voice data to recognize and understand the voice data (step S5). As a result of the understanding of the speech voice A1, the task requested by the user U (acquisition request of content or search request of POI information) and the keywords important for the execution of the task are specified.

The VR server 6 performs the voice recognition in the in-vehicle interactive system 1 as described above.

Next, the service providing server 4 determines whether the content needs to be narrowed down (step S6). In the determination of whether the content needs to be narrowed down, it is determined that the narrowing down is "necessary" if the content to be provided cannot be specified or if the number of search results of the POI information exceeds a predetermined number based on the result of understanding of the speech voice A1.

For example, if the speech voice A1 includes words or language that can directly specify the content of the lower layer genres J1, J2, ... in the acquisition request of the content, the content requested by the user U is sufficiently specified, and it is determined that the narrowing down is "unnecessary".

On the other hand, for example, if the user U inputs only the name of the genre J "news" as the speech voice A1, the number of contents is too large, and the content requested by the user U is not specified. Therefore, the service providing server 4 determines that the narrowing down is "necessary" in this case.

The content is narrowed down in the format of interaction with the user U. The service providing server 4 generates text data of an interactive response sentence for promoting a reply of the speech voice A1 necessary for the narrowing down and transmits the text data to the in-vehicle information appliance 3 (step S7).

When the in-vehicle information appliance 3 receives the text data of the interactive response sentence (step S8), the in-vehicle information appliance 3 outputs a voice by reading out loud the text data through a synthetic voice and displays an interactive response screen V2 on the HUD 14 (step S9).

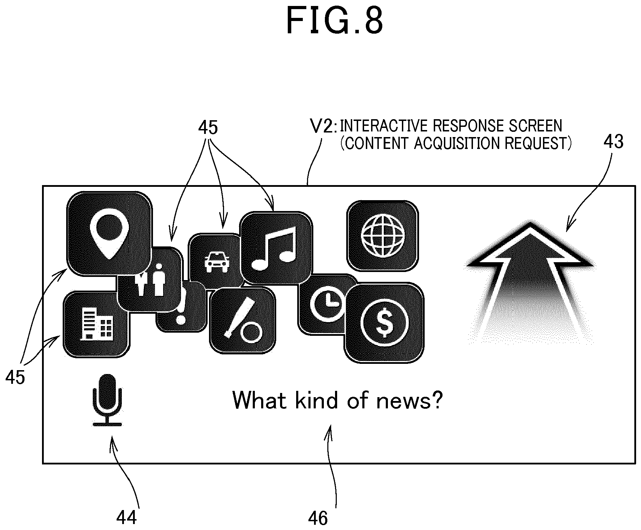

Figure 8 is a diagram showing an example of display of the interactive response screen V2 in the acquisition request of the content.

In the acquisition request of the content, a character string of an interactive response sentence 46 is displayed on the interactive response screen V2. The interactive response sentence 46 is displayed, and the user U can figure out the content of the interactive response even if the user U cannot hear the voice output of the interactive response sentence under the sound of the running vehicle 2 or the like.

Although the interactive response sentence 46 suggests the details that the user U needs to answer in the interactive response screen V2, the association images 45 are also displayed on the interactive response screen V2 so that the user U can easily imagine the words or language to be used for the speech of the answer.

The example of display illustrates the interactive response screen V2 for narrowing down the news content belonging to the genre J of "news", and therefore, images related to "economics", "sports", and the like that are names of the lower layer genre J1 arranged under the genre J of the "news" are used as the association images 45.

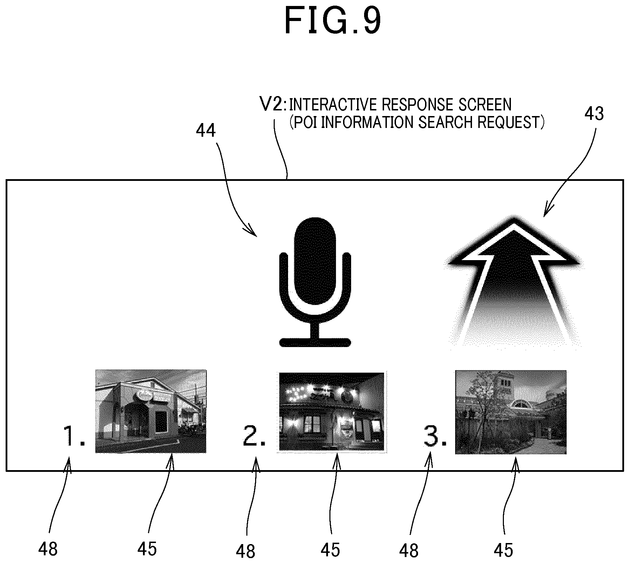

Figure 9 is a diagram showing an example of display of the interactive response screen V2 in the POI information search request.

In the POI information search request, the association image 45 is displayed on the interactive response screen V2, for each POI information hit in the search. The images of the association images 45 are, for example, photographic images of facilities, buildings, or landscapes indicated by the POI information, and based on the association images 45, the user U imagines the words or language indicating the names or features of the POI.

In the interactive response screen V2, an item number (identifier) is also displayed next to each association image 45. In the POI information search request, the item number is equivalent to the interactive response sentence, and the item number is also read out loud by the synthetic voice in the display of the interactive response screen V2. The user U speaks the item number instead of the word or language imagined from the association image 45, and the designation of the desired POI information is facilitated.

Returning to Figure 6, when the speech voice A1 is input as the user U speaks to answer the interactive response sentence (step S10), the in-vehicle information appliance 3 transmits the voice data of the speech voice A1 to the service providing server 4 (step S11).

When the service providing server 4 receives the voice data of the speech voice A1 (step S12), the service providing server 4 applies the interactive voice recognition process to the voice data to recognize and understand the voice (step S13).

The service providing server 4 then determines whether the content data needs to be narrowed down (step S14). If the narrowing down is "necessary", the service providing server 4 returns to step S7 and repeats the process for the narrowing down.

If the narrowing down is "unnecessary", the service providing server 4 acquires the search result of the content data or POI information requested by the user U from the content server 5 (step S15) and transmits the search result to the in-vehicle information appliance 3 (step S16).

When the in-vehicle information appliance 3 receives the search result of the content data or POI information (step S17), the in-vehicle information appliance 3 provides the search result to the user U by outputting the search result through the voice and display (step S18).

Specifically, when the search result of the content data or POI information includes text data, the in-vehicle information appliance 3 reads out lout the text data by synthetic voice and outputs the display based on the search result of the content data or POI information to the LCD 13. When the content data is music content data, the in-vehicle information appliance 3 reproduces and outputs the music content data.

Note that when the in-vehicle information appliance 3 outputs and displays the search result of the content data and the POI information, the in-vehicle information appliance 3 may also display the virtual images of the information regarding the search result of the content data and the POI information on the HUD 14.

According to the embodiment described above, the following advantageous effects are attained.

That is, in the in-vehicle information appliance 3 that outputs a response based on the result of applying the interactive voice recognition process to the speech voice A1 spoken by the user U, the association images 45 that are icons associated with the words or language used in the speech for obtaining the response are displayed on the HUD 14 of the display unit 12.

According to the configuration, the user U can view the association images 45 to imagine the words or language spoken by the voice input, and the user U can appropriately speak according to the desired response without a prior knowledge of the voice input operation of the in-vehicle information appliance 3.

This enables the voice input operation based on a free speech, and the in-vehicle information appliance 3 with a significantly high convenience can be realized in which the user U does not become unable to decide the words or language used for the speech.

According to the present embodiment, the icons associated with the content that can be output by the in-vehicle information appliance 3 are displayed as the association images 45.

As a result, the user U imagines the words and language related to the content that can be output by the in-vehicle information appliance 3 and uses the words and language for the speech. Therefore, the user U can easily obtain the content even if the user U does not know in advance the range of the content that can be output.

According to the present embodiment, when the content is not specified by the speech voice A1 of the user U, the interactive response sentence 46 for specifying the content and the association images 45 associated with the words or language used for the speech in answering the interactive response sentence are displayed on the HUD 14 of the display unit 12.

As a result, the user U can smoothly execute the voice input operation without being unable to decide the words or language used to answer the interactive response sentence.

According to the present embodiment, when a plurality of pieces of POI information are specified as the POI information requested by the user U, the association image 45 of each POI information is displayed on the HUD 14 along with the item number 47 that is an identifier.

According to the configuration, the user U can use the item numbers 47 in the speech for selecting the POI information, in addition to the words and language imagined from the association images 45. Particularly, the user U can uniquely select the POI information by using the item numbers 47 for the speech.

Note that if a plurality of content data are specified when the task is a content acquisition request, it is obvious that the association image 45 of each content data may be displayed on the interactive response screen V2 in the HUD 14 along with an identifier, just like the POI information.

According to the present embodiment, the association images 45 are displayed on the HUD 14.

According to the configuration, even during the driving operation, the driver can imagine the words or language used for the speech by viewing the association images 45 without significantly looking away.

Furthermore, the icons associated with the words or language used for the speech are used for the association images 45, and the association images 45 are not character strings directly indicating the words or language. Therefore, a dangerous act of reading the characters during driving can be avoided even when the association images 45 are displayed on the display device that displays the driving support image 43.

Note that the embodiment can be arbitrarily modified and applied without departing from the scope of the present invention.

For example, the display of the association images 45 may be stopped in the embodiment when the user U gets used to the voice input operation with a high degree of freedom.

The service providing server 4 may generate the image data of the association images 45 according to, for example, the content of the interactive response sentence and transmit the image data to the in-vehicle information appliance 3 to display the image data on the HUD 14.

The pictures of the association images 45 shown in Figures 7 to 9 and the like are illustrative only, and the pictures are not limited to these. For example, an icon depicting "newspaper" is used as the association image 45 associated with a word related to the genre J of "news" in Figure 7.

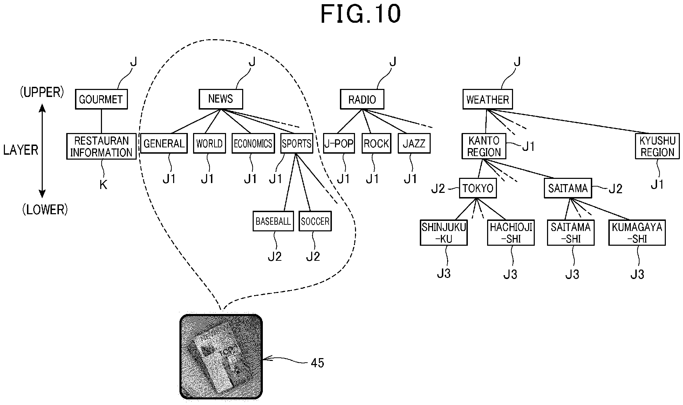

As described, the icon of "newspaper" makes the user U imagine not only the name of the genre J "news", but also the names of the genres of the lower layer genres J1, such as "economics" and "sports", systemized in the lower layer of the genre J of the "news" as well as the names of the genres of the lower layer genres J2, such as "baseball" and "soccer", in a layer further below the lower layer genres J1 as shown in Figure 10.

In addition, the association image 45 depicting the "newspaper" is also used to make the user U imagine or suggests the words or language of the content (for example, "exchange rate" and "match results of soccer") associated with the genre J, the lower layer genres J1, J2 ... by the tag information.

In this way, the association image 45 of the embodiment is depicted as an icon including the genre J and the lower layer genres J1, J2, ... systemized in the lower layers of the genre J as well as each content associated with the genre J or the lower layer genres J1, J2, ....

As a result, if, for example, an image for the user U to unambiguously recognize the name and the word of the association image 45 is presented as the association image 45 for each of the genre J, the lower layer genres J1, J2, ... and the content, the user U just speaks the unambiguously recognized name or word. On the other hand, one association image 45 can promote the speech by allowing the user U to imagine not only the genre J, but also the lower layer genres J1, J2, ... and the content. As a result, the number of times of speech input is also reduced.

Specific examples of the association image 45 include an icon of one graphic, character, or sign (hereinafter, called a graphic or the like) symbolizing all of the contained genre J, the lower layer genres J1, J2 ... and the content as well as icons depicted to include each of a graphic or the like symbolizing the genre J, a graphic or the like symbolizing the lower layer genres J1, J2, ..., and a graphic or the like symbolizing the content.

In the embodiment, the tasks that can be received by the service providing server 4 and the content that can be provided are illustrative only, and arbitrary tasks and content can be set.

Figures 2 and 4 are schematic diagrams categorizing the functional components of the in-vehicle information appliance 3 and the service providing server 4 according to main processing content in order to facilitate the understanding of the present invention. The components can be further categorized into more constituent elements according to the processing content. The components can also be categorized such that one constituent element executes more processes. The process by each constituent element may be executed by one piece of hardware or may be executed by a plurality of pieces of hardware.

The process of each constituent element may be realized by one program or may be realized by a plurality of programs. In this case, each of the in-vehicle information appliance 3 and the service providing server 4 downloads the computer programs through, for example, the telecommunication line 7 or reads out the computer programs from a computer-readable recording medium, and a CPU of each executes the computer programs.

Furthermore, the processes of the flow chart of Figure 6 are divided according to the main processing content in order to facilitate the understanding of the display process of the association images 45, for example. The present invention is not limited by the method or name of dividing the processes.

That is, the display process of the association images 45 can be divided into more processes according to the processing content. The display process can also be divided such that one transaction includes more processes. The order of processing of the flow chart is not limited to the illustrated example as long as the association images 45 are displayed in the same way.

The association images 45 of the embodiment can be displayed not only on the in-vehicle appliance, but also on a display unit of an arbitrary appliance as long as the appliance makes a response by recognizing the voice input of the user U through the interactive voice recognition process. This can improve the convenience of the user operation.

### Reference Signs List

- 1: in-vehicle interactive system
- 2: vehicle
- 3: in-vehicle information appliance
- 4: service providing server
- 5: content server
- 10: voice input unit
- 12: display unit
- 14: HUD (head-up display)
- 15: voice output unit (output unit)
- 30: control unit
- 34: display control unit
- 35: server cooperation unit
- 40: front windshield
- 43: driving support image
- 44: microphone image
- 45: association image
- 46: interactive response sentence
- 47: item number (identifier)
- 48: content storage unit
- 50: control unit
- 54: interactive voice recognition processing unit
- 56: speech voice input unit
- 57: voice recognition unit
- 58: speech content understanding unit
- 59: response unit
- A1: speech voice
- U: user
- J: genre
- J1, J2,: lower layer genres
- V: virtual image screen
- V1: standby screen
- V2: interactive response screen

## Claims

1. An in-vehicle interactive system comprising:
an in-vehicle information appliance that receives a speech voice spoken by a user;
an interactive voice recognition processing unit that applies an interactive voice recognition process to the speech voice; and
a response unit that sends a response based on a result of the interactive voice recognition process to the in-vehicle information appliance, the in-vehicle interactive system further comprising:
a display unit provided on the in-vehicle information appliance; and
a display control unit that displays, on the display unit, an image of an icon associated with a word or language used in a speech for obtaining the response.

2. The in-vehicle interactive system according to claim 1, further comprising
a content storage unit that stores a plurality of contents, wherein
the response unit
acquires a content from the content storage unit based on the result of the interactive voice recognition process and outputs the content to the in-vehicle information appliance, and
the display control unit
displays, on the display unit, images of icons associated with the contents stored in the content storage unit.

3. The in-vehicle interactive system according to claim 2, wherein
when the content acquired from the content storage unit is not specified, the display control unit
displays, on the display unit, an interactive response sentence for specifying the content and images of icons associated with words or language used for a speech in answering the interactive response sentence.

4. The in-vehicle interactive system according to claim 2, wherein
when a plurality of contents are specified based on the result of the interactive voice recognition process, the display control unit
displays, on the display unit, images of icons associated with the contents along with identifiers.

5. The in-vehicle interactive system according to claim 1, wherein
the display unit
is a head-up display that displays virtual images in front of a driver of a vehicle.

6. An in-vehicle information appliance comprising:
a voice input unit that receives a speech voice spoken by a user; and
an output unit that outputs a response based on a result of applying an interactive voice recognition process to the speech voice,
the in-vehicle information appliance further comprising:
a display unit; and
a display control unit that displays, on the display unit, an image of an icon associated with a word or language used in a speech for obtaining the response.

7. The in-vehicle information appliance according to claim 6, wherein
the output unit
outputs a content based on a result of the interactive voice recognition process, and
the display control unit
displays, on the display unit, images of icons associated with contents that can be output by the output unit.

8. The in-vehicle information appliance according to claim 7, wherein
when the content output to the output unit is not specified, the display control unit
displays, on the display unit, an interactive response sentence for specifying the content and images of icons associated with words or language used for a speech in answering the interactive response sentence.

9. The in-vehicle information appliance according to claim 7, wherein
when a plurality of contents are specified based on the result of the interactive voice recognition process, the display control unit
displays, on the display unit, images of icons associated with the contents along with identifiers.

10. The in-vehicle information appliance according to claim 6, wherein
the display unit
is a head-up display that displays virtual images in front of a driver.
